# FASCICULE DE BREVET EUROPEEN

(11) **EP 0 302 804 B1**
(45) Date de publication et mention de la délivrance du brevet: **26.01.1994**
(21) Numéro de dépôt: 88430021.1
(22) Date de dépôt: 22.07.1988
(51) Int. Cl.: H01R 43/28, B65G 17/32

(54) **Procédés et dispositifs pour sertir mécaniquement une pièce de connexion sur les extrémités de plusieurs fils conducteurs**
Verfahren und Vorrichtung zum maschinellen Krimpen eines Verbindungsteiles mit den Enden meherer leitenden Drähte
Process and device for mechanically crimping a connection piece on the ends of several conductive wires

(30) Priorité: 07.08.1987 FR 8711391
(43) Date de publication de la demande: 08.02.1989
(73) Titulaire: L'ENTREPRISE INDUSTRIELLE, F-75008 Paris (FR)
(72) Inventeur: L'ENTREPRISE INDUSTRIELLE, F-75008 Paris (FR)
(74) Mandataire: Wind, Jacques

(56) Documents cités:
- DE-U- 8 610 436
- FR-A- 2 130 212

## Description

La présente invention a pour objet des procédés et des dispositifs pour sertir mécaniquement une pièce de connexion sur les extrémités de plusieurs fils conducteurs qui peuvent avoir des diamètres différents.

Le secteur technique de l'invention est celui de la construction des machines automatiques de câblage.

On connaît des machines automatiques de câblage qui comportent un ou plusieurs convoyeurs qui déplacent des tronçons de fil devant divers postes de travail situés le long des convoyeurs, pour obtenir, à la sortie de la machine, des lots de fils conducteurs, équipés de pièces de connexion,qui sont serties sur les extrémités des fils. Ces machines sont commandées par un ordinateur central programmable. Elles découpent automatiquement des tronçons de fils, dont la longueur est déterminée par le programme. Elles dénudent celles-ci et elles effectuent automatiquement les opérations de sertissage.

Le brevet FR. 81/18.181 (AUTOMATISMES ET TECHNIQUES AVANCEES), décrit des machines de ce type comportant un plateau qui porte des paires d'étaux qui tiennent un fil par ses deux extrémités pour présenter celles-ci radialement à des postes de travail placés à la périphérie du plateau.

Une telle machine de câblage permet de réaliser des sertissages simples. Elle peut à la rigueur permettre de réaliser des sertissages doubles sur deux fils de même section à la condition de pouvoir faire tourner le plateau dans les deux sens de marche. Elle ne permet pas de réaliser des sertissages doubles de fils de section différente, ni des sertissages multiples. Elle ne permet pas de réaliser facilement des guirlandes.

Dans de nombreuses applications, il est nécessaire de fabriquer des guirlandes comportant une pluralité de pièces de connexion, qui sont reliées entre elles par des fils conducteurs, qui établissent entre elles une continuité électrique et une liaison mécanique.

Par exemple, l'industrie automobile nécessite la construction de telles guirlandes permettant de distribuer le potentiel positif à une pluralité de bornes.

Dans d'autres applications, il est nécessaire de réaliser de telles guirlandes permettant de connecter un ensemble de bornes sur une même masse.

Comme état de la technique peut encore être cité le document DE-U-89 16436, qui décrit un convoyeur muni de pinces fixées à demeure sur celui-ci, et apte à transporter des tronçons de fils entre plusieurs postes de travail.

L'objectif de la présente invention est de procurer des moyens et, notamment une machine de câblage automatique, qui permet de réaliser facilement des sertissages simples ou des sertissages multiples, sur des fils conducteurs de même section ou de section différente et qui permet, de ce fait, de fabriquer automatiquement des guirlandes de fils conducteurs associés à plusieurs pièces de connexion,pouvant avoir des compositions complexes.

Un procédé selon l'invention est destiné à permettre de sertir mécaniquement une pièce de connexion sur les extrémités de plusieurs fils conducteurs, lesquels sont transportés, de façon connue, par des pinces qui sont placées sur un convoyeur faisant partie d'une machine de câblage automatique, lesquelles pinces tiennent chacune une extrémité d'un tronçon de fil conducteur.

L'objectif de l'invention est atteint par un procédé suivant lequel on engage sur ledit convoyeur des pinces pouvant tenir un ou plusieurs fils, on saisit chaque tronçon de fil par ses deux extrémités, au moyen de deux pinces successives portées par ledit convoyeur, on déplace pas à pas ledit convoyeur, on saisit une ou deux extrémités de certains tronçons de fils portés par lesdites pinces, au moyen d'un manipulateur,que l'on déplace d'un point à un autre dudit convoyeur, qui vient engager cette extrémité ou ces deux extrémités dans une ou deux autres pinces portées par ledit convoyeur qui peuvent déjà tenir un ou plusieurs fils et on sertif une pièce de connexion sur le groupe de fils tenus par chaque pince.

Selon un mode de réalisation préférentiel, lesdites pinces sont engagées par paires et régulièrement espacées sur un premier convoyeur entrainé pas à pas, les deux extrémités de chaque tronçon de fil étant alors saisies par une desdites paires de pinces, une ou les deux extrémités de certains fils tenus par ces pinces étant alors saisies au moyen d'un manipulateur que l'on déplace parallèlement à ce premier convoyeur et qui vient engager cette extrémité ou ces deux extrémités dans une ou deux autres pinces qui sont passées de ce premier convoyeur à un deuxième convoyeur qui est situé dans le prolongement de ce premier convoyeur et qui est entraîné pas à pas de façon indépendante de ce premier convoyeur.

Avantageusement, après qu'elles ont lâché le ou les fils qu'elles tenaient, certaines desdites pinces sont retirées dudit ou desdits convoyeurs et sont posées sur un convoyeur de retour qui circule en sens inverse et qui recycle lesdites pinces en tête du premier convoyeur.

Un dispositif selon l'invention comporte :
- des moyens mécaniques pour déposer simplement ces pinces sur le convoyeur ainsi que pour les en retirer;
- des moyens de coopération entre le socle de chacune de ces pinces et des éléments constitutifs dudit convoyeur qui immobilisent, après qu'elles ont été déposées sur ce convoyeur, ces pinces longitudinalement et transversalement sur ce dernier;
- un manipulateur muni d'au moins une pince et équipé de moyens permettant de le déplacer d'un point à un autre dudit convoyeur, ce manipulateur étant apte à saisir une extrémité ou les deux extrémités d'un tronçon de fil tenu par une ou deux pinces, ouvrir ces pinces, se déplacer et engager cette extrémité ou ces deux extrémités dans une ou deux autres pinces portées par le convoyeur et dont certaines tiennent déjà un ou plusieurs fils.

Un dispositif selon l'invention comporte des moyens mécaniques, qui sont placés en tête du convoyeur et qui permettent d'engager lesdites pinces sur ledit convoyeur, de façon qu'elles soient entraînées sans glissement par celui-ci.

Selon un mode de réalisation préférentiel, le convoyeur est une courroie crantée et lesdites pinces comportent un socle dont la face inférieure est pourvue de nervures transversales qui délimitent des rainures dans lesquelles les crans de ladite courroie peuvent être engagés.

Avantageusement, le convoyeur comporte, en outre, deux profilés situés de part et d'autre de ladite courroie crantée, qui constituent une glissière dans laquelle lesdits socles sont engagés et peuvent coulisser.

Un dispositif selon l'invention comporte, en outre, des postes de sertissage disposés du côté dudit convoyeur où se trouvent les extrémités des fils tenus par lesdites pinces.

Selon un mode de réalisation préférentiel, un dispositif selon l'invention comporte un premier convoyeur et un deuxième convoyeur,placé dans le prolongement du premier et entraîné pas à pas, dans le même sens, de façon indépendante et ledit manipulateur peut être déplacé d'un point du premier convoyeur à un point du deuxième convoyeur, de sorte que ledit manipulateur saisit une ou deux extrémités d'un fil tenu par des pinces situées sur le premier convoyeur et se déplace pour venir se positionner en regard d'une ou deux pinces qui sont situées sur le deuxième convoyeur et dont certaines tiennent déjà un ou plusieurs fils et pour engager, soit dans l'une de celles-ci l'extrémité d'un fil dont l'autre extrémité est tenue par une pince qui passe du premier au deuxième convoyeur, soit dans deux de celles-ci les deux extrémités d'un fil.

Le résultat de la présente invention est la construction de machines de câblage capables de réaliser automatiquement des sertissages simples ou des sertissages multiples d'une même pince de connexion, sur plusieurs fils conducteurs, de même section ou de section différente et de fabriquer automatiquement des guirlandes de fils complexes.

Les machines selon l'invention, qui comportent des pinces séparables des convoyeurs, permettent de faire passer des pinces tenant des fils d'un convoyeur à un deuxième convoyeur situé dans l'alignement du premier. Elles permettent de retirer du premier convoyeur ou d'un convoyeur unique, les pinces qui sont libérées de leur fil, de sorte que ces pinces ne se trouvent plus sur le convoyeur dans la zone de mariage des fils et qu'il est possible de réaliser des guirlandes comportant des tronçons de fils très courts.

Une machine selon l'invention comportant des pinces amovibles, permet d'organiser un circuit de recyclage automatique des pinces en tête du convoyeur et de pouvoir faire fonctionner la machine en continu avec un stock de pinces relativement limité.

La description suivante se réfère aux dessins annexés qui repréesntent, sans aucun caractère limitatif, un exemple de réalisation d'un dispositif selon l'invention.

La figure 1 représente une pièce de connexion sertie sur deux fils.

La figure 2 est une vue en plan schématique de l'ensemble d'un dispositif selon l'invention.

La figure 3 est une vue en élévation d'un premier mode de réalisation de pinces.

Les figures 4 et 5 sont une vue en coupe transversale et une vue en élévation d'un deuxième mode de réalisation d'une pince selon l'invention.

La figure 6 est une vue de la face inférieure d'un socle de pince selon l'invention.

La figure 7 est une vue d'un exemple de guirlande réalisable sur un dispositif selon l'invention.

La figure 8 est une vue en élévation d'un dispositif de transbordement des pinces entre deux convoyeurs successifs.

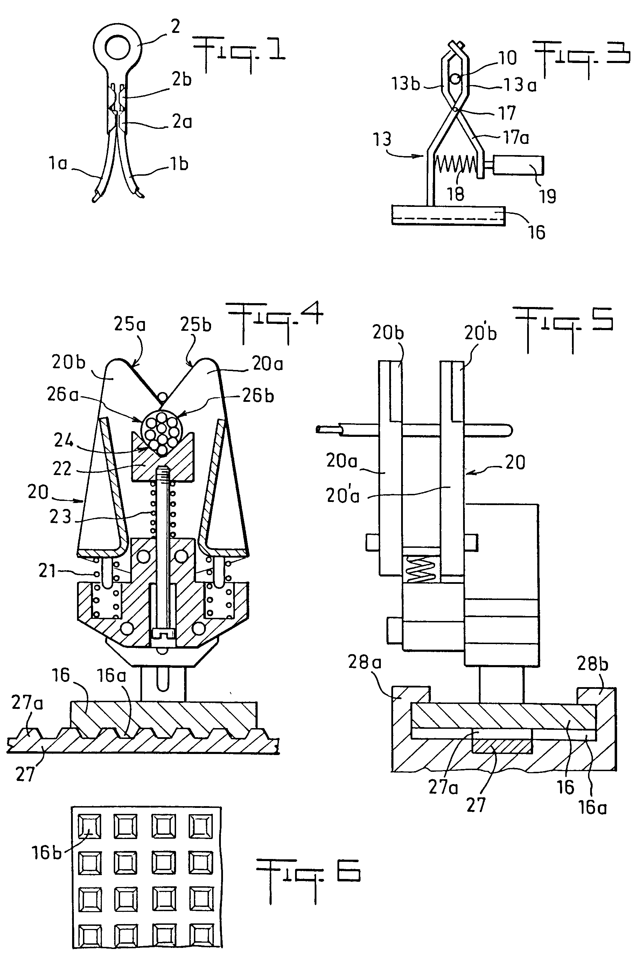

La figure 1 représente un double sertissage, c'est-à-dire une pièce de connexion 2, qui peut avoir diverses formes, qui comporte deux ailettes de sertissage 2a, qui sont rabattues sur la gaine isolante de deux fils 1a, 1b et deux ailettes de sertissage 2b qui sont rabattues sur les extrémités dénudées de ces fils. De la même façon, il est courant de réaliser des sertissages multiples, c'est-à-dire de sertir une même pièce de connexion sur les extrémités dénudées de plusieurs fils qui peuvent avoir la même section ou des sections différentes.

L'objectif de l'invention est de procurer des moyens permettant de réaliser mécaniquement des sertissages doubles ou multiples, sur des fils conducteurs de même section ou de section différente, au moyen de machines automatiques qui comportent un ou plusieurs convoyeurs qui déplacent des tronçons de fils, découpés à des longueurs déterminées, devant des postes mécaniques de travail répartis le long desdits convoyeurs.

Le brevet FR. 81/18.181 (AUTOMATISMES ET TECHNIQUES AVANCEES), décrit des machines automatiques de câblage qui comportent un convoyeur constitué par un plateau tournant, qui est entraîné en rotation par un moteur pas à pas commandé par une unité centrale de calcul.

Ce plateau porte des paires d'étaux qui saisissent les deux extrémités de chaque tronçon de fil à la sortie d'un poste de dévidement du fil, chaque tronçon formant une boucle qui dépend de la longueur du tronçon.

Les étaux sont déplacés par le plateau tournant et ils présentent d'abord le fil à un poste de sectionnement. Ils pivotent ensuite de 90°, en sens inverse l'un de l'autre, pour présenter les deux extrémités de chaque fil en position radiale à des postes de travail qui se situent à la périphérie du plateau tournant et qui effectuent automatiquement sur ces extrémités diverses opérations, telles qu'enlever un tronçon de gaine isolante pour dénuder le fil conducteur, engager un manchon isolant thermorétractable sur chaque extrémité du fil et sertir l'extrémité dénudée sur une pièce de connexion.

Une machine de câblage équipée d'étaux comme celle qui est décrite dans le brevet FR. 81/18.181, permet de réaliser mécaniquement des sertissages simples et, à la rigueur, des sertissages doubles à la condition que les deux fils à sertir aient la même section. Elle ne permet pas de réaliser des sertissages doubles sur deux fils de section différente, ni des sertissages multiples.

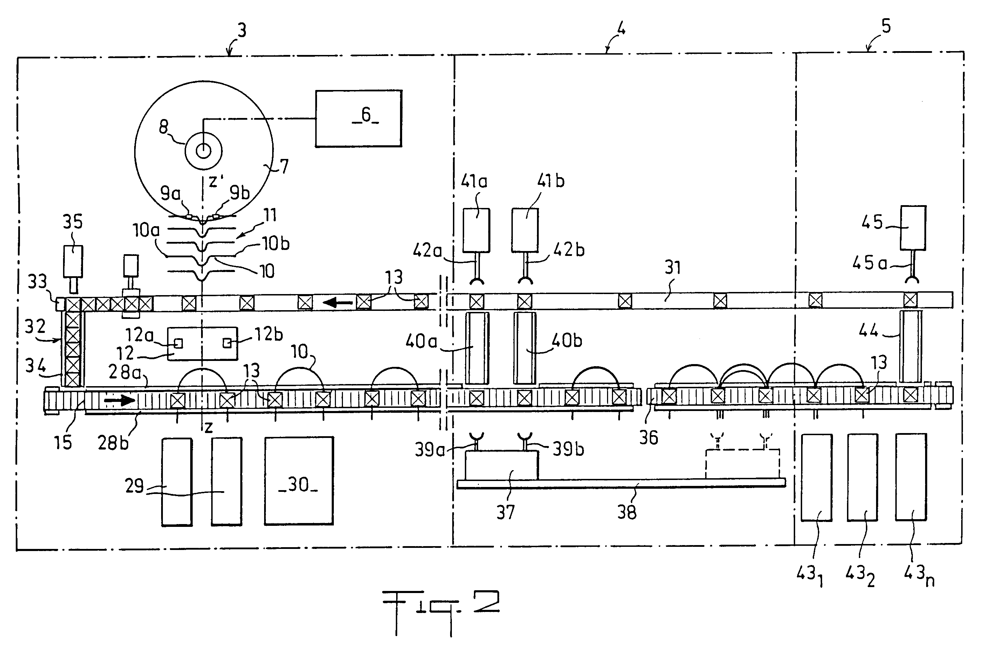

La figure 2 est une vue en plan schématique qui présente les parties essentielles d'une machine de câblage selon l'invention.

Cette machine peut être décomposée en trois zones 3, 4 et 5, représentées en traits mixtes.

La première zone repérée 3, est la zone de traitement individuel des extrémités des fils.

La deuxième zone repérée 4, est la zone de mariage des fils entre eux, de façon à regrouper plusieurs fils pour les présenter simultanément et ultérieurement à des postes de travail, notamment à des postes de sertissage.

La troisième zone repérée 5 est la zone de traitement des extrémités groupées.

L'ensemble des opérations est commandée automatiquement par un ordinateur central 6.

La zone 3 de traitement des extrémités isolées comporte une machine automatique équipée d'un plateau tournant 7 qui est entraîné en rotation par un moteur pas à pas 8.

Le plateau tournant 7 porte des paires d'étaux 9a, 9b qui saisissent les extrémités de chaque tronçon de fil à la sortie d'un poste de dévidement, qui peut choisir entre plusieurs fils de section différente et qui dévide chaque fois une longueur de fil déterminée commandée par l'ordinateur 6.

Après être passé à un poste de sectionnement, chaque paire d'étaux présente les tronçons de fils successifs 10 sur un poste de sortie 11 où les fils sortent raidalement au plateau.

Le plateau 7 portant les paires d'étaux 9a, 9b est par exemple, celui d'une machine selon le brevet FR. 81/18.181 qui est utilisée uniquement pour dévider les fils et les découper en tronçons de longueur déterminée.

La machine selon l'invention comporte un manipulateur 12 qui est équipé de deux pinces 12a, 12b, qui saisissent les deux extrémités 10a, 10b de chaque tronçon de fil et qui pivotent de 90° en sens inverse l'une de l'autre, autour d'un axe vertical pour amener les deux extrémités parallèles et dirigées vers l'avant. Les mouvements de rotation des pinces sont actionnés par des servomoteurs commandés par l'ordinateur central 6.

Le chariot 12 est déplaçable suivant l'axe z z′ du poste de déchargement 11 et il peut ainsi venir dans une position où les deux extrémités d'un tronçon de fil se trouvent placées au-dessus de deux pinces 13 qui sont placées sur un premier convoyeur linéaire 15.

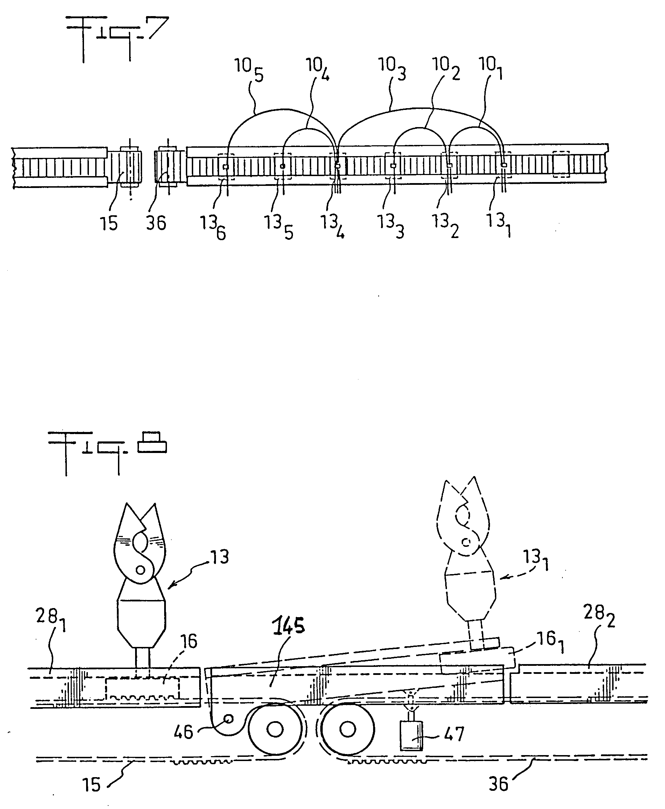

La figure 3 représente une vue en élévation d'un exemple de réalisation d'une pince 13 équipant le convoyeur 15.

Chaque pince comporte un socle 16 qui a la forme d'une plaque qui est solidarisée avec le convoyeur 15, de telle sorte qu'elle est entraînée en translation par celui-ci sans glissement. Chaque pince 13 comporte une paire de mors ou mâchoires 13a, 13b. L'un des mors, par exemple le mors 13a est fixé au socle 16. Le deuxième mors 13b est relié au mors fixe par une articulation 17 et il est prolongé par un levier 17a qui est tiré dans le sens de la fermeture par un ressort 18. Un vérin 19 permet d'écarter le levier 17a et d'ouvrir la pince. Un tronçon de fil 10 est maintenu entre les deux mors.

Les pinces 13 sont placées sur le convoyeur 15 avec un espacement ou intervalle bien déterminé entre deux pinces d'une même paire, qui correspond à la distance entre les deux pinces 12a et 12b, de sorte que lorsque le chariot 12 avance, les deux extrémités 10a, 10b d'un même fil se trouvent positionnées au-dessus d'une paire de pinces 13.

L'ordinateur central 6 commande alors l'ouverture des mors des deux pinces 13 en actionnant les vérins 19, puis l'ouverture des étaux 12a et 12b, puis la fermeture des pinces 13.

Il est précisé que la figure 3 représente seulement un exemple de réalisation des pinces non limitatif.

Avantageusement, les pinces 13 peuvent être également des pinces 20 conformes à celles qui sont décrites et revendiquées dans une demande de brevet séparée, déposée le même jour et qui sont représentées en coupe perpendiculaire au faisceau de fil sur la figure 4 et en vue de côté sur la figure 5.

Dans ce cas, chaque pince 20 comporte deux paires de becs 20a, 20b et 20′a, 20′b, maintenus en position fermée par des ressorts de rappel 21 et elles comportent également un piston 22 qui est placé entre les deux paires de becs et qui est repoussé vers le haut par un ressort de rappel 23. la face supérieure du piston comporte une encoche évasée 24.

Le bord interne de chaque bec comporte une rampe descendante vers le centre 25a, 25b et immédiatement au-dessous de cette rampe, une encoche concave 26a, 26b.

Le convoyeur 15 est un convoyeur sans fin rectiligne.

Selon un mode de réalisation préférentiel représenté sur les figures 4 et 5, c'est une courroie crantée 27 qui est entraînée par un moteur pas à pas, qui est actionné par l'ordinateur central 6. Le brin supérieur est déplacé dans le sens de la flèche, c'est-à-dire de gauche à droite sur la figure 2. Dans ce cas, les pinces 13 ou les pinces 20, sont montées sur un socle 16, dont la face inférieure comporte des nervures 16a dont la largeur et le pas correspondent aux crans 27a de la courroie 27.

La figure 6 représente un mode de réalisation préférentiel de la face inférieure d'un socle 16 carré qui comporte des plots en relief 16b qui correspondent aux croisements de nervures transversales et de nervures longitudinales, de sorte que ce socle peut être utilisé sur le même convoyeur suivant deux orientations perpendiculaires, ce qui permet de déplacer également des fils dont les extrémités sont parallèles au convoyeur.

La figure 5 représente une coupe transversale d'un mode de réalisation préférentiel d'un convoyeur 15 selon l'invention.

Celui-ci comporte deux profilés latéraux 28a, 28b qui sont parallèles à la courroie crantée 27 et qui ont des ailes supérieures dirigées vers le convoyeur, de sorte qu'ils forment une glissière dans laquelle les socles 16 des pinces, qui sont plus larges que la courroie 27, sont engagés et peuvent coulisser. La glissière 28a, 28b guide les socles des pinces tandis que les crans 27a de la courroie, qui sont engagés entre les nervures 16a entraînent les socles et translation sans glissement.

Le convoyeur 15 est entraîné pas à pas, chaque pas correspondant à l'écartement entre deux pinces 13, de sorte qu'après deux pas d'avancement du convoyeur, une nouvelle paire de pinces vient se présenter en face du manipulateur 12, pour recevoir les deux extrémités d'un nouveau tronçon de fil.

Il est possible de laisser passer une ou plusieurs pinces devant le manipulateur 12, sans les charger d'un fil.

Divers postes de travail 29, 30, simples ou doubles, sont disposés d'un même côté du convoyeur, qui est le côté où se trouvent les extrémités des fils tenus par les pinces. L'écartement entre ces postes de travail est égal au pas ou à un multiple du pas , d'avancement du convoyeur 15, de sorte qu'après chaque déplacement du convoyeur, un nouveau fil est présenté à chaque poste de travail.

Ces postes de travail 29, 30 sont des postes connus servant, par exemple, à dénuder les extrémités des fils et à effectuer sur celles-ci des opérations ou des contrôles individuels.

La zone 3 comporte, de plus, un deuxième convoyeur sans fin rectiligne 31, qui est parallèle au convoyeur 15 et qui s'étend sur toute la longueur de la machine. Le brin supérieur du convoyeur 31, qui est le brin actif, se déplace en sens inverse du brin supérieur du convoyeur 15. Le convoyeur 31 est par exemple une courroie plate sans fin. Les pinces 13 sont simplement posées sur le convoyeur qui sert à les ramener en tête du convoyeur 15.

La zone 3 de l'installation comporte un dispositif 32 de transfert des pinces entre la sortie du convoyeur 31 et la tête du convoyeur 15.

Les pinces 13 s'accumulent à l'extrémité du convoyeur 31 sous l'effet de la poussée qui est exercée par les pinces qui se trouvent encore sur le convoyeur et qui sont entraînées par friction.

La première pince vient s'appuyer contre une butée 33, de sorte qu'elle se trouve placée dans l'axe d'un moyen de guidage 34 qui est transversal aux deux convoyeurs et qui est constitué par exemple par deux profilés analogues et de même écartement que les profilés 28a et 28b, formant une glissière dans laquelle les socles 16 des pinces peuvent coulisser.

L'extrémité avant de la glissière 34 se trouve placée sur le côté du convoyeur 15 et les déplacements pas à pas de celui-ci sont programmés pour que le convoyeur 15 occupe à l'arrêt une position telle que les crans de la courroie crantée se trouvent alignés avec les rainures transversales de la face inférieure du socle, de sorte que le socle peut s'engager sur les crans de la courroie 15 lorsqu'il est poussé. Un vérin 35 est placé dans l'alignement du guidage 34, de l'autre côté du convoyeur 31.

Le fonctionnement est le suivant.

Les déplacements pas à pas du convoyeur 15 sont réalisés par pas qui correspondent à la distance entre deux pinces 13 et également à l'écartement entre les pinces 12a et 12b du manipulateur 12.

Après le premier pas, le vérin 35 est actionné de sorte qu'il repousse vers l'avant la rangée de pinces se trouvant dans la glissière 34 et qu'il engage sur le convoyeur la pince qui était située à l'extrémité avant de la glissière. Le vérin 35 revient en arrière et une nouvelle pince vient en appui contre la butée 33 sous la poussée exercée par les pinces placées sur le convoyeur 31.

Le convoyeur 15 avance d'un nouveau pas. Le vérin est actionné à nouveau et une nouvelle pince 13 est engagée sur le convoyeur 15.

Après ces opérations, deux pinces vides se trouvent placées en face des pinces 12a et 12b du manipulateur, qui est actionné pour transférer un nouveau tronçon de fil 10 sur ces deux pinces.

En variante, le dispositif de transfert 32 peut comporter deux glissières parallèles 34 dont l'écartement est égal à l'écartement des pinces sur le convoyeur 15 et deux vérins 35 alignés chacun avec une glisisère 34 et, dans ce cas, le convoyeur 15 avance par pas égaux à deux fois l'écartement entre pinces et, après chaque pas, on met en place simultanément deux pinces sur le convoyeur 15.

La figure 2 représente un dispositif qui comporte une deuxième zone 4 de groupage ou mariage de plusieurs fils sur une pince.

L'installation selon l'invention comporte, avantageusement, un deuxième convoyeur 36, analogue au convoyeur 15, qui est placé dans l'alignement de celui-ci et qui circule dans le même sens. La jonction entre les deux convoyeurs se situe dans la zone de groupage ou de mariage 4.

Le dispositif de groupage comporte un manipulateur qui comporte un support mobile déplaçable d'un point du convoyeur 5 à un point du convoyeur 31, par exemple un chariot motorisé 37, monté sur un rail 38, parallèle aux deux convoyeurs, qui s'étend de part et d'autre de la jonction entre ceux-ci. Le chariot 37 porte une ou plusieurs pinces, de préférence deux pinces 39a, 39b, dont l'écartement est égal au pas entre pinces placées sur le convoyeur 15.

Le chariot 37 peut saisir avec ses pinces 39a, 39b, une ou deux extrémités d'un fil 10 tenu par deux pinces 13, situées sur la couronne 15, puis se déplacer sur le rail 38 et venir replacer le fil sur une ou deux autres pinces situées sur le convoyeur 36, de sorte que ces autres pinces regroupent alors plusieurs fils comme on le voit sur la figure 2.

La figure 2 représente une position du chariot en butée à l'extrémité gauche du rail 38. Dans ce position, les deux pinces 39a et 39b sont alignées avec deux couloirs de guidage 40a et 40b transversaux, qui sont situés entre le convoyeur 15 et le convoyeur de retour 31.

La glissière 28a du convoyeur 15 est interrompue à cet endroit pour laisser passer les socles des pinces. Alignés respectivement avec chacun des couloirs de guidage 40a et 40b se trouvent deux vérins 41a et 41b portant chacun une pince 42a et 42b.

La figure 2 représente un mode de réalisation dans lequel le rail 38 est disposé sur un côté des convoyeurs 15 et 36.

Avantageusement, le rail 38 peut être placé au-dessus desdits convoyeurs lorsque les pinces 13 sont des pinces conformes aux figures 4 et 5.

Il est précisé que le mode de réalisation représenté sur la figure 2, qui comporte deux convoyeurs alignés 15 et 31, est un mode de réalisation non limitatif.

Un dispositif selon l'invention peut également comporter un seul convoyeur 15 s'étendant sur toute sa longueur.

Le fonctionnement est le suivant.

Le convoyeur 15 s'arrête dans une position où une paire de pinces 13 situées sur ce convoyeur et tenant les deux extrémités d'un fil 10 se trouvent placées dans l'alignement des deux couloirs de guidage 40a et 40b.

L'ordinateur central amène le chariot 37 à l'extrémité du rail 38, de sorte que les deux pinces 39a et 39b saisissent par exemple, les deux extrémités du fil 10 et ouvrent les deux pinces 13, qui éjectent le fil.

Le chariot 37 est ensuite déplacé vers l'avant pour venir engager les deux extrémités du fil 10 dans deux pinces placées sur le convoyeur 36.

Les deux pinces 13, qui tenaient le fil 10, sont alors vides. Les deux vérins 41a et 41b sont actionnés et leurs pinces 42a et 42b saisissent les deux pinces 13 vides et les tirent le long des couloirs de guigage 40a, 40b pour les amener sur le convoyeur 31, sur lequel elles sont posées et le mouvement continu de convoyeur 31 les ramène vers le poste de transfert 32 où elles sont recyclées.

Le mode de réalisation comportant deux convoyeurs 15 et 16 placés bout à bout, permet d'entraîner le convoyeur 36 par un deuxième moteur pas à pas, différent de celui qui entraîne le convoyeur 15 et, de préférence,avec des pas égaux mais des cadences différentes, de sorte que les pinces se succèdent sur le convoyeur 36 avec des pas égaux entre pinces, sans interruption, ce qui permet de réaliser des guirlandes comme celle qui est représentée, c'est-à-dire un ensemble continu de tronçons de fils connectés sur plusieurs pièces de connexion, avec des sertissages multiples, ce qui est un cas fréquent dans la pratique, en particulier dans les faisceaux de fils conducteurs de voiture.

Le fait de disposer de deux convoyeurs indépendants alignés en association avec les moyens d'éjection des pinces vides, permet de réaliser des guirlandes comportant des longueurs de fil limitées, entre les pièces de connexion. il suffit que chaque tronçon de fil ait une longueur minima légèrement supérieure à la distance entre les deux pinces qu'il relie.

Pour réaliser des guirlandes telles que celle qui est représentée sur la figure 2, certaines paires de pinces 13, placées sur le convoyeur 15, passent directement du convoyeur 15 au convoyeur 36 en continuant à tenir un tronçon de fil.

Les deux pinces 39a et 39b du manipulateur 37 sont actionnables séparément, de sorte qu'il est possible de saisir une seule extrémité d'un tronçon de fil. Dans ce cas, l'autre extrémité reste tenue par une des pinces qui poursuit son avancement et qui passe du convoyeur 15 au convoyeur 36. Dans ce cas, la longueur du fil doit être suffisante pour permettre le libre déplacement du chariot 37.

La figure 7 représente une vue en plan de la jonction entre les deux convoyeurs 15 et 36 et un exemple du type de groupement de fils qu'un dispositif selon l'invention permet de réaliser.

Le groupe de pinces situées sur le convoyeur 36 sont numérotées dans l'ordre ou elles arrivent sur ce convoyeur.

Les pinces 13₁ et 13₂ passent d'abord du convoyeur 15 au convoyeur 16 en tenant les deux extrémités d'un tronçon de fil 10₁. La pince 13₃ arrive ensuite à l'extrémité du convoyeur 15 et passe sur le convoyeur 36 en tenant une extrémité d'un tronçon de fil 10₂. La deuxième extrémité du tronçon 10₂ est saisie par le manipulateur 37, qui vient l'engager dans la pince 13₂.

Une nouvelle pince 13₄ arrive à l'extrémité du convoyeur 15 et passe sur le convoyeur 36 en tenant une extrémité d'un tronçon de fil 10₃ dont la deuxième extrémité est saisie par le manipulateur 37 qui vient l'engager dans la pince 13₁.

Une nouvelle pince 13₅ arrive à l'extrémité du convoyeur 15 et passe sur le convoyeur 36 en tenant une extrémité d'un fil 10₄, dont la deuxième extrémité est saisie par le chariot 37 qui vient l'engager sur la pince 13₄.

Une nouvelle pince 13₆ arrive à l'extrémité du convoyeur 15, en tenant une extrémité d'un tronçon de fil 10₅, dont la deuxième extrémité est saisie par le chariot manipulateur 37, qui vient l'engager sur la pince 13₄. On a ainsi réalisé un ensemble de fils dans lequel les pinces 13₁ et 13₂ regroupent deux fils et la pince 13₄ en regroupe trois.

Chaque fois que le manipulateur a libéré une pince, celle-ci est retirée du convoyeur 15 par une des pinces 42a ou 42b, de sorte que le convoyeur 36 ne porte aucune pince inutilisée.

Dans le cas où il y aurait un seul convoyeur 15, on pourrait également supprimer les pinces non utilisées mais l'espacement des pinces sur le convoyeur resterait le même, ce qui nécessiterait des longueurs de fils supérieures.

Un dispositif selon l'invention comporte une troisième zone 5 où se situent les organes de traitement des extrémités des fils regroupées, tenues par les pinces 13 portées par le convoyeur 36.

Cette zone 5 comporte plusieurs postes de sertissage 43₁, 43₂.....43n, destinés à sertir différentes pièces de connexion sur les extrémités des fils en réalisant des sertissages simples, doubles ou multiples.

Elle peut comporter également un poste destiné à ramener sur les sertissages un manchon thermorétractable qui a été engagé sur les fils individuels par l'un des postes de travail 29, 30 de la zone 3, puis à retreindre ce manchon.

Lorsque les pièces de connexion ont été serties sur les fils, un manipulateur, par exemple un bras articulé muni de pinces, saisit chaque pièce de connexion et l'enfiche sur un composant électrique et les pinces se trouvent libérées.

L'installation comporte un dispositif de recyclage des pinces vides comprenant un couloir transversal de guidage 44 et un vérin 45 équipé d'une pince 45a situé dans l'alignement du couloir 44. Une fois les pinces libérées des fils, le vérin 45 est actionné pour saisir chaque pince et la faire coulisser dans le couloir de guidage 44 pour l'amener sur le convoyeur 31 qui la ramène vers le poste de recyclage 32.

La figure 8 représente un mode de réalisation préférentiel d'un dispositif de transbordement des pinces 13 placé à la jonction entre le premier convoyeur 15 et le deuxième convoyeur 16, qui sont constitués tous deux d'une courroie crantée dont le brin supérieur est placé dans le fond d'une glissière 28₁ ou 28₂ composée de deux profilés 28a, 28b conformément à la figure 5.

Les glissières fixes 28₁ et 28₂ sont interrompues à l'endroit de la jonction et elles sont remplacées par une glissière mobile 145 qui présente la même section transversale et qui est articulée autour d'un axe transversal 46.

L'extrémité avant de la glissière mobile 145 comporte, dans son fond, une découpe longitudinale axiale, dont la largeur est légèrement supérieure à celle de la courroie crantée 36.

On a représenté en traits pleins une position de la glissière et en traits pointillés une deuxième position. Un vérin 47 permet de soulever le dispositif 145. On a représenté une pince 13 arrivant à la sortie du convoyeur 15. Le socle 16 de la pince est engagé dans la glissière 28₁ et les nervures de la face inférieure du socle engrènent avec les crans de la courroie 15.

Lorsque le dispositif de transbordement est dans la position en pointillés, les pinces 13 arrivant par le convoyeur 15 s'engagent dans la glissière mobile 45. La première pince vient se placer dans la position 13₁, dans laquelle son socle 16₁ est en butée contre les ailes de la glissière 28₂ qui peuvent être grugées sur une petite longueur pour faciliter l'introduction ultérieure dans cette glissière. Les autres pinces arrivant par le convoyeur 15 viennent buter les unes contre les autres, de sorte que la glissière mobile 145 sert de magasin de stockage intermédiaire entre les deux convoyeurs.

Lorsqu'on désire envoyer une pince sur le deuxième convoyeur, on commande le vérin 47 qui fait redescendre la glissière mobile. A ce moment là, les nervures du socle 16 de la première pince qui se situent au-dessus de la découpe ménagée dans le fond de la glissière, viennent au contact avec les crans de la courroie 36 et s'engagent dans ceux-ci et la pince est entraînée le long de la glissière 28₂.

Le dispositif de transbordement selon la figure 8 présente l'avantage de permettre de rendre les deux convoyeurs 15 et 36 indépendants l'un de l'autre, en ce qui concerne la vitesse d'avancement.

## Revendications

1. Procédé pour sertir mécaniquement une pièce de connexion (2) sur les extrémités (1a, 1b, 10a, 10b) de plusieurs fils conducteurs (10) qui sont transportés par des pinces (13) placées sur un convoyeur (15,36) d'une machine de câblage (3,4,5), caractérisé en ce qu'on engage sur ce convoyeur (15,36) des pinces (13) pouvant tenir un ou plusieurs fils (10), on saisit chaque tronçon de fil (10) par ses deux extrémités (10a, 10b) au moyen de deux pinces successives (13) portées par ce convoyeur (15,36), on déplace pas à pas ledit convoyeur (15,36), on saisit une ou deux extrémités (10a, 10b) de certains tronçons de fils (10) portés par ces pinces (13) au moyen d'un manipulateur (37) que l'on déplace d'un point à un autre du convoyeur (15,36) et qui vient engager cette extrémité ou ces extrémités (10a, 10b) dans une ou deux autres pinces (13₁, 13₂,...) portées par ce convoyeur (15,36) et qui peuvent déjà tenir un ou plusieurs fils (10₁, 10₂,...), et on sertit une pièce de connexion (2) sur le groupe de fils (10₁,10₃,...) tenus par chaque pince (13₁,...).

2. Procédé selon la revendication 1, caractérisé en ce que lesdites pinces (13) sont engagées par paires et régulièrement espacées sur un premier convoyeur (15) entrainé pas à pas, les deux extrémités (10a, 10b) de chaque tronçon de fil (10) étant alors saisies par une desdites paires de pinces (13), une ou les deux extrémités (10a, 10b) de certains fils tenus par ces pinces étant alors saisies au moyen d'un manipulateur (37) que l'on déplace parallèlement à ce premier convoyeur (15) et qui vient engager cette extrémité ou ces deux extrémités (10a, 10b) dans une ou deux autres pinces (13₁, 13₂,...) qui sont passées de ce premier convoyeur (15) à un deuxième convoyeur (36) qui est situé dans le prolongement de ce premier convoyeur (15) et qui est entraîné pas à pas de façon indépendante de ce premier convoyeur (15).

3. Procédé selon l'une quelconque des revendications 1 ou 2, caractérisé en ce que, après qu'elles ont lâché le ou les fils (10) qu'elles tenaient, certaines desdites pinces (13) sont retirées dudit ou desdits convoyeurs (15,36) et sont posées sur un convoyeur de retour (31) qui circule en sens inverse et qui recycle lesdites pinces (13) en tête du premier convoyeur (15).

4. Dispositif apte à assurer la mise en oeuvre du procédé selon l'une des revendications 1 à 3, pour sertir mécaniquement des pièces de connexion (2) sur les extrémités (1a, 1b, 10a, 10b) d'un ou plusieurs fils conducteurs (10) qui sont transportés par un convoyeur (15,36) entraîné pas à pas et portant des pinces (13) régulièrement espacées qui tiennent chacune un ou plusieurs fils conducteurs (10), ce dispositif comportant :
- des moyens mécaniques (32 à 35; 40a,42a,41a ; 40b,42b,41b; 44,45) pour déposer simplement ces pinces (13) sur ce convoyeur (15,36) ainsi que pour les en retirer;
- des moyens de coopération (27a,16a; 16,28a,28b) entre le socle (16) de chacune de ces pinces et des éléments constitutifs (27, 28a, 28b) dudit convoyeur qui immobilisent, après qu'elles ont été déposées sur ce convoyeur, ces pinces (13) longitudinalement et transversalement sur ce dernier (15,36);
- un manipulateur (37) muni d'au moins une pince (39a, 39b) et équipé de moyens (38) permettant de le déplacer d'un point à un autre dudit convoyeur (15,36), ce manipulateur (37) étant apte à saisir une extrémité ou les deux extrémités (10a, 10b) d'un tronçon de fil (10) tenu par une ou deux pinces (13), ouvrir ces pinces, se déplacer et engager cette extrémité ou ces deux extrémités (10a, 10b) dans une ou deux autres pinces (13₁,13₂,...) portées par le convoyeur (36) et dont certaines tiennent déjà un ou plusieurs fils (10₁,10₂,...).

5. Dispositif selon la revendication 4, caractérisé en ce qu'il comporte en outre des postes de sertissage (43₁, 43₂,...) disposés du côté dudit convoyeur (15,36) où se trouvent les extrémités des fils (10) tenus par lesdites pinces (13).

6. Dispositif selon la revendication 4 ou la revendication 5, caractérisé en ce qu'il comporte des moyens mécaniques (32), placés en tête dudit convoyeur, qui permettent d'engager lesdites pinces sur ledit convoyeur (15), de façon qu'elles soient entraînées sans glissement par ledit convoyeur.

7. Dispositif selon l'une des revendications 4 à 6, caractérisé en ce que ledit convoyeur (15) est une courroie crantée (27) et lesdites pinces (13) comportent un socle (16), dont la face inférieure est pourvue de nervures transversales (16a)qui délimitent des rainures dans lesquelles les crans (27a) de ladite courroie (27) peuvent être engagés.

8. Dispositif selon la revendication 7, caractérisé en ce que la face inférieure dudit socle (16) comporte des plots en relief (16b) disposés aux croisements entre deux systèmes de nervures orthogonales.

9. Dispositif selon l'une des revendications 4 à 8, caractérisé en ce que ledit convoyeur (15,36) comporte deux profilés (28a, 28b), situés de part et d'autre de ladite courroie crantée, qui constituent une glissière dans laquelle lesdits socles sont engagés et peuvent coulisser, ces profilés ne s'etendant pas jusqu'aux extrémités du convoyeur.

10. Dispositif selon l'une des revendications 4 à 9, caractérisé en ce qu'il comporte un premier convoyeur (15) et un deuxième convoyeur (36),placé dans le prolongement du premier et entraîné pas à pas, dans le même sens, de façon indépendante et ledit manipulateur peut être déplacé d'un point du premier convoyeur à un point du deuxième convoyeur (36), de sorte que ledit manipulateur (37) saisit une ou deux extrémités d'un fil (10) tenu par des pinces (13) situées sur le premier convoyeur (15) et se déplace pour venir se positionner en regard d'une ou deux pinces (13) qui sont situées sur le deuxième convoyeur (36) et dont certaines (13₁,13₂,...) tiennent déjà un ou plusieurs fils (10₁,10₂,...) et pour engager, soit dans l'une de celles-ci l'extrémité d'un fil (10) dont l'autre extrémité est tenue par une pince (13) qui passe du premier (15) , au deuxième convoyeur (36), soit dans deux de celles-ci les deux extrémités d'un fil (10).

11. Dispositif selon l'une quelconque des revendications 4 à 10, caractérisé en ce qu'il comporte un convoyeur de retour (31) qui est parallèle audit convoyeur (15, 36), et qui est entraîné en sens inverse de celui-ci et il comporte des couloirs de guidage transversaux (40a, 40b, 44), situés entre les deux convoyeurs et des vérins (41a, 41b, 45), munis de pinces ( 42a, 42b,45a), situées dans l'alignement desdits couloirs qui permettent de saisir les pinces (13), libérées de leur fil se trouvant sur lesdits premier et deuxième convoyeurs (15, 36) et de les amener sur ledit convoyeur de retour qui les ramène vers un poste de transfert des pinces (32), situé en tête du premier convoyeur (15).

12. Dispositif selon la revendication 11, caractérisé en ce que ledit poste de transfert (32) comporte un magasin de stockage des pinces vides, situé dans l'alignement de la sortie dudit convoyeur de retour (31), un couloir de guidage transversal (34)situé entre ledit magasin de stockage et la tête dudit premier convoyeur (15) et un vérin (35) aligné avec ledit couloir (34).

13. Dispositif selon l'une quelconque des revendications 4 à 12, caractérisé en ce qu'il comporte un plateau tournant (7) entraîné par un moteur pas à pas (8) et portant des paires d'étaux (9a, 9b) qui délivrent des tronçons de fil (10) de longueur déterminée à un poste de sortie (11) et il comporte un manipulateur (12) équipé de deux pinces (12a, 12b) qui saisissent chaque tronçon de fil (10) arrivant au poste de sortie (11) et, après rotation de 90° en sens inverse l'une de l'autre, placent ce tronçon de fil dans deux pinces (13) portées par ledit convoyeur (15), les deux extrémités du tronçon de fil se trouvant alors du même côté du convoyeur.

14. Dispositif selon la revendication 10, caractérisé en ce qu'il comporte un dispositif de transbordement des pinces entre les deux convoyeurs et de magasin intermédiaire, qui est composé d'une glissière (145), qui est intercalée entre l'extrémité aval de la glissière (28₁) du premier convoyeur (15) et l'extrémité amont de la glissière (28₂) du deuxième convoyeur (36), qui a la même section que ces deux glissières, qui est articulée autour d'un axe transversal (46) et équipée d'un vérin (47) et dont l'extrémité avant comporte une découpe longitudinale axiale dont la largeur est supérieure à celle du deuxième convoyeur (36).

## Claims

1. Process for mechanically crimping a connection piece (2) on to the ends (1a, 1b, 10a, 10b) of several conducting wires (10) which are conveyed by pincers (13) positioned on a conveyor (15, 36) of a wiring machine (3, 4, 5), characterised in that pincers (13) are engaged on this conveyor (15, 36), which pincers can hold one or several wires (10), each section of wire (10) is grasped by its two ends (10a, 10b) by means of two successive pincers (13) carried by this conveyor (15, 36), the said conveyor (15, 36) is moved stepwise, one or two ends (10a, 10b) of some sections of wire (10) carried by these pincers (13) is or are grasped by means of a manipulator (37) which is moved from one point to another of the conveyor (15, 36) and acts to insert this end or these ends (10a, 10b) in one other or two other pincers (13₁, 13₂,...) which are carried by this conveyor (15, 36) and can already be holding one or several wires (10₁, 10₂,...), and a connection piece (2) is crimped on to the group of wires (10₁, 10₃,...) held by each pincer (13₁,...).

2. Process according to claim 1, characterised in that the said pincers (13) are engaged in pairs and regularly spaced on a first conveyor (15) driven stepwise, the two ends (10a, 10b) of each section of wire (10) then being grasped by one of the said pairs of pincers (13), one or both ends (10a, 10b) of some wires held by these pincers then being grasped by means of a manipulator (37) which is moved in parallel with this first conveyor (15) and acts to insert this end or these two ends (10a, 10b) in one other or two other pincers (13₁, 13₂,...) which are passed from this first conveyor (15) to a second conveyor (36) which is located so that it extends from this first conveyor (15) and which is driven stepwise independently of this first conveyor (15).

3. Process according to either one of claims 1 or 2, characterised in that, after they have released the wire or wires (10) which they were holding, some of the said pincers (13) are removed from the said conveyor or conveyors (15, 36) and are placed on a return conveyor (31) which runs in the opposite direction and recycles the said pincers (13) at the head of the first conveyor (15).

4. Device suitable for ensuring the implementation of the process according to one of claims 1 to 3, for mechanically crimping connection pieces (2) on to the ends (1a, 1b, 10a, 10b) of one or several conducting wires (10) which are conveyed by a conveyor (15, 36) driven stepwise and carrying regularly spaced pincers (13), each of which holds one or several conducting wires (10), whereby this device comprises:
- mechanical means (32 to 35; 40a, 42a, 41a; 40b, 42b, 41b; 44, 45) for simply depositing these pincers (13) on this conveyor (15, 36) as well as for removing them therefrom;
- co-operation means (27a, 16a; 16, 28a, 28b) between the base (16) of each of these pincers and component parts (27, 28a, 28b) of the said conveyor, which co-operation means, after the pincers (13) have been deposited on this conveyor, immobilise these pincers (13) in the longitudinal direction and in the transverse direction on this conveyor (15, 36);
- a manipulator (37) provided with at least one pincer (39a, 39b) and fitted with means (38) enabling it to be moved from one point to another of the said conveyor (15, 36), this manipulator (37) being suitable for grasping one end or both ends (10a, 10b) of a section of wire (10) held by one or two pincers (13), opening these pincers, moving, and inserting this end or these two ends (10a, 10b) in one other or two other pincers (13₁, 13₂,...) carried by the conveyor (36), some of which pincers are already holding one or several wires (10₁, 10₂,...).

5. Device according to claim 4, characterised in that it further comprises crimping stations (43₁, 43₂,...) arranged at the side of the said conveyor (15, 36) where the ends of the wires (10) held by the said pincers (13) are located.

6. Device according to claim 4 or claim 5, characterised in that it comprises mechanical means (32) positioned at the head of the said conveyor which enable the said pincers to be engaged on the said conveyor (15) so that they are driven without slipping by the said conveyor.

7. Device according to one of claims 4 to 6, characterised in that the said conveyor (15) is a synchronous belt (27) and the said pincers (13) comprise a base (16), the lower surface of which is provided with transverse ribs (16a) which define grooves in which the notches (27a) of the said belt (27) can be engaged.

8. Device according to claim 7, characterised in that the lower surface of the said base (16) comprises raised blocks (16b) arranged at the points of intersection between two systems of orthogonal ribs.

9. Device according to one of claims 4 to 8, characterised in that the said conveyor (15, 36) comprises two sectional bars (28a, 28b) located on either side of the said synchronous belt, which sectional bars form a slide way in which the said bases are engaged and can slide, whereby these sectional bars do not extend as far as the ends of the conveyor.

10. Device according to one of claims 4 to 9, characterised in that it comprises a first conveyor (15) and a second conveyor (36) which is positioned as an extension of the first conveyor and which is driven stepwise in the same direction and independently, and the said manipulator can be moved from a point on the first conveyor to a point on the second conveyor (36), so that the said manipulator (37) grasps one or two ends of a wire (10) held by pincers (13) located on the first conveyor (15) and moves so that it comes into position opposite one or two pincers (13) which are located on the second conveyor (36), some (13₁, 13₂) of which pincers already hold one or several wires (10₁, 10₂,...), and so that either it inserts the end of a wire (10) in one of these pincers, the other end of this wire being held by a pincer (13) which passes from the first conveyor (15) to the second conveyor (36), or it inserts the two ends of a wire (10) in two of these pincers.

11. Device according to any one of claims 4 to 10, characterised in that it comprises a return conveyor (31) which is parallel with the said conveyor (15, 36) and which is driven in the opposite direction to this conveyor (15, 36), and it comprises transverse guiding slides (40a, 40b, 44) located between the two conveyors and jacks (41a, 41b, 45) provided with pincers (42a, 42b, 45a) located in line with the said slides which enable the pincers (13), freed of their wire located on the said first and second conveyors (15, 36), to be grasped and brought on to the said return conveyor, which brings them back to a pincer transfer station (32) located at the head of the first conveyor (15).

12. Device according to claim 11, characterised in that the said transfer station (32) comprises a storage container for empty pincers, which storage container is located in line with the outlet of the said return conveyor (31), a transverse guiding slide (34) located between the said storage container and the head of the said conveyor (15), and a jack (35) in line with the said slide (34).

13. Device according to any one of claims 4 to 12, characterised in that it comprises a turning platform (7) driven by a step motor (8) and carrying pairs of vices (9a, 9b) which deliver sections of wire (10) of a pre-determined length to an output station (11), and it comprises a manipulator (12) fitted with two pincers (12a, 12b) which grasp each section of wire (10) arriving at the output station (11) and, after rotating by 90° in the opposite direction relative to each other, position this section of wire in two pincers (13) carried by the said conveyor (15), both ends of the section of wire then being located on the same side of the conveyor.

14. Device according to claim 10, characterised in that it comprises a device for transporting pincers between the two conveyors and for intermediate storage, which device comprises a slide way (145) (sic) which is inserted between the downstream end of the slide way (28₁) of the first conveyor (15) and the upstream end of the slide way (28₂) of the second conveyor (36), whereby the said slide way (45) (sic) has the same cross-section as these two slide ways, is hinged around a transverse axis (46) and is fitted with a jack (47), and the front end of this slide way (145) (sic) has a longitudinal axial cutting, the width of which is greater than the width of the second conveyor (36).

## Patentansprüche

1. Verfahren zum maschinellen Krimpen eines Verbindungsteils (2) mit den Enden (1a, 1b, 10a, 10b) mehrerer leitender Drähte (10), die von Klemmen (13) transportiert werden, welche auf einem Transportband (15, 36) einer Verdrahtungsmaschine (3, 4, 5) angeordnet sind, dadurch gekennzeichnet, daß auf dem Transportband (15, 36) Klemmen (13) vorgesehen werden, die einen oder mehrere Drähte (10) halten können, daß jeder Drahtabschnitt (10) an seinen beiden Enden (10a, 10b) mittels zweier aufeinander folgender vom Transportband (15, 36) getragener Klemmen (13) ergriffen wird, daß das Transportband (15, 36) schrittweise verschoben wird, daß eines oder zwei Enden (10a, 10b) bestimmter von den Klemmen (13) getragener Drahtabschnitte (10) mittels eines Manipulators (37) ergriffen werden, der von einer Stelle zu einer anderen des Transportbandes (15, 36) verschoben wird und der dieses Ende oder diese Enden (10a, 10b) in eine oder zwei andere vom Transportband (15, 36) getragene Klemmen (13₁, 13₂ ...) einlegt, welche bereits einen oder mehrere Drähte (10₁, 10₂ ...) halten und daß ein Verbindungsteil (2) mit der von jeder Klemme (13₁ ...) gehaltenen Gruppe von Drähten (10₁, 10₃ ...) gekrimpt wird.

2. Verfahren nach Anspruch 1, dadurch gekennzeichnet, daß die Klemmen (13) paarweise und im regelmäßigen Abstand auf einem ersten schrittweise angetriebenen Transportband (15) vorgesehen sind, daß die beiden Enden (10a, 10b) eines jeden Drahtabschnittes (10) durch ein Klemmenpaar (13) ergriffen werden, daß eines oder beide Enden (10a, 10b) bestimmter von den Klemmen gehaltener Drähte danach mittels eines Manipulators (37) ergriffen werden, der parallel zum ersten Transportband (15) verschoben wird und daß dieses Ende oder diese beiden Enden (10a, 10b) in eine oder mehrere Klemmen (13₁, 13₂ ...) eingelegt werden, die vom ersten Transportband (15) einem zweiten Transportband (36) übergeben wurden, welches in der Verlängerung des ersten Transportbandes (15) angeordnet ist und unabhängig vom ersten Transportband (15) schrittweise angetrieben wird.

3. Verfahren nach einem der Ansprüche 1 oder 2, dadurch gekennzeichnet, daß nachdem die von ihnen gehaltenen Drähte (10) freigegeben worden sind, bestimmte Klemmen (13) von dem oder den Transportbändern (15, 36) entfernt werden und auf einem Rückkehrband (31) mit entgegengesetzter Laufrichtung abgesetzt werden, welches die Klemmen (13) zur Kopfstation des ersten Transportbandes (15) zurückführt.

4. Vorrichtung zur Durchführung des Verfahrens nach einem der Ansprüche 1 bis 3, zum maschinellen Krimpen von Verbindungsteilen (2) mit den Enden (1a, 1b, 10a, 10b) eines oder mehrerer leitender Drähte (10), die von einem schrittweise angetriebenen Transportband (15, 36) transportiert werden, welches im regelmäßigen Abstand angeordnete Klemmen (13) trägt, die jeweils einen oder mehrere leitende Drähte tragen, wobei die Vorrichtung aufweist:
- eine maschinelle Anordnung (32 bis 35; 40a, 42, 41a; 40b, 42b, 41b; 44, 45) zum einfachen Absetzen der Klemmen (13) auf dem Transportband (15, 36) und um sie von ihm zu entfernen;
- eine Wirkanordnung (27a, 16a; 16, 28a, 28b) zwischen dem Sockel (16) einer jeden Klemme und den das Transportband bildenden Bauteilen (27, 28a, 28b), um nach der Ablage der Klemmen (13) auf dem Transportband diese in Längs- und Querrichtung auf letzterem (15, 36) festzulegen;
- einen Manipulator (37), der mit wenigstens einer Klemme (39a, 39b) versehen ist sowie mit einer Anordnung (38) zu ihrer Verschiebung von einer Stelle zur anderen auf dem Transportband (15, 36), wobei der Manipulator (37) ein Ende oder zwei Enden (10a, 10b) eines Drahtabschnitts (10) ergreifen kann, das von einem oder zwei Klemmen (13) gehalten wird, die Klemmen öffnen kann, sich verschieben und dieses Ende oder diese beiden Enden (10a, 10b) in eine oder zwei andere Klemmen (13₁, 13₂ ...) einlegen kann, welche vom Transportband (13) getragen werden und von denen einige bereits einen oder mehrere Drähte (10₁, 10₂ ...) tragen.

5. Vorrichtung nach Anspruch 4, dadurch gekennzeichnet, daß sie außerdem Krimpstationen (43₁, 43₂ ...) aufweist, welche auf derjenigen Seite des Transportbandes (15, 36) angeordnet sind, an der sich die Enden der von den Klemmen (13) gehaltenen Drähte (10) befinden.

6. Vorrichtung nach Anspruch 4 oder 5, dadurch gekennzeichnet, daß sie eine maschinelle Anordnung (32) an der Kopfstation des Transportbandes aufweist, zum Eingriff der Klemmen mit dem Transportband (15) dergestalt, daß sie ohne zu gleiten vom Transportband mitgenommen werden.

7. Vorrichtung nach einem der Ansprüche 4 bis 6, dadurch gekennzeichnet, daß das Transportband (15) ein gerippter Riemen (27) ist und daß die Klemmen (13) einen Sockel (16) aufweisen, dessen untere Fläche mit Querrippen (16a) versehen ist, welche Nuten begrenzen, in die die Rippen (27a) des Bandes (27) eingreifen können.

8. Vorrichtung nach Anspruch 7, dadurch gekennzeichnet, daß die untere Fläche des Sockels (16) hervorspringende Klötze (16b) aufweist, die an den Kreuzungsstellen zwischen zwei senkrecht aufeinander stehenden Rippengruppen angeordnet sind.

9. Vorrichtung nach einem der Ansprüche 4 bis 8, dadurch gekennzeichnet, daß das Transportband (15, 36) zwei Profilschienen (28a, 28b) aufweist, die beidseits des gerippten Bandes angeordnet sind und Gleitführungen bilden, in welche die Sockel eingreifen und entlang gleiten, wobei sich die Profilschienen nicht bis zu den Enden des Transportbandes erstrecken.

10. Vorrichtung nach einem der Ansprüche 4 bis 9, dadurch gekennzeichnet, daß sie ein erstes Transportband (15) und ein zweites Transportband (36) aufweist, welches in Verlängerung des ersten angeordnet ist und in gleicher Richtung aber unabhängig schrittweise angetrieben wird und daß der Manipulator von einer Stelle am ersten Transportband zu einer Stelle am zweiten Transportband (36) dergestalt verschiebbar ist, daß der Manipulator (37) ein oder zwei Enden eines von den Klemmen (13) am ersten Transportband (15) gehaltenen Drahtes (10) ergreift und verschoben wird, bis er einer oder zwei Klemmen (13) am zweiten Transportband (36) gegenüberliegt, wobei einige (13₁, 13₂ ...) bereits einen oder mehrere Drähte (10₁, 10₂ ...) halten und um in eine dieser das Ende eines Drahtes (10) einzulegen, dessen anderes Ende von einer Klemme (13) gehalten wird, die vom ersten (15) zum zweiten Transportband (36) übergeben wird oder um die beiden Enden eines Drahtes (10) in zwei von ihnen einzulegen.

11. Vorrichtung nach einem der Ansprüche 4 bis 10, dadurch gekennzeichnet, daß sie ein Rückkehrband (31) aufweist, das parallel zum Transportband (35, 36) ist und das in entgegengesetzter Richtung zu ihm angetrieben wird und daß sie quer angeordnete Rutschbahnen (40a, 40b, 44) aufweist, die zwischen zwei Transportbändern angeordnet sind sowie Druckzylinder (41a, 41b, 45) aufweist, die mit Klemmen (42a, 42b, 45a) versehen sind und in Verlängerung der Rutschbahnen angeordnet sind und die es ermöglichen die von ihrem Draht befreiten Klemmen (13) zu ergreifen, die sich auf den ersten und zweiten Transportbändern (15, 36) befinden und sie auf das Rückkehrband zu befördern, welches sie zu einer Übergabestation (32) für die Klemmen an der Kopfstation des ersten Transportbandes zurückführt.

12. Vorrichtung nach Anspruch 11, dadurch gekennzeichnet, daß die Übergabestation (32) ein Speichermagazin für leere Klemmen aufweist, das in Verlängerung der Abgabestelle des Rückkehrbandes (31) angeordnet ist und eine quer angeordnete Rutschbahn (34) aufweist, die zwischen dem Speichermagazin und der Kopfstation des Transportbandes (15) angeordnet ist sowie einen zur Rutschbahn (34) ausgerichteten Druckzylinder (35) aufweist.

13. Vorrichtung nach einem der Ansprüche 4 bis 12, dadurch gekennzeichnet, daß sie einen Drehteller (7) aufweist, der von einem Schrittmotor (8) antreibbar ist und Klemmbackenpaare (9a, 9b) trägt, welche Drahtabschnitte (10) vorgegebener Länge einer Abgabestation (11) zuführen sowie einen Manipulator (12) aufweist, der mit zwei Klemmen (12a, 12b) versehen ist, welche jeden der an der Abgabestation (11) ankommenden Drahtabschnitte (10) ergreifen und nach Verdrehung um 90° in entgegengesetzter Richtung zueinander diesen Drahtabschnitt in zwei Klemmen (13) einlegen, welche vom Transportband (15) getragen werden, wobei die beiden Enden der Drahtabschnitte auf derselben Seite des Transportbandes angeordnet sind.

14. Vorrichtung nach Anspruch 13, dadurch gekennzeichnet, daß sie eine Vorrichtung zur Übergabe der Klemmen zwischen den beiden Transportbändern und zur Zwischenspeicherung aufweist, welche aus einer Gleitführung (145) besteht, die zwischen dem hinteren Ende der Gleitführung (28₁) des ersten Transportbandes (15) und dem vorderen Ende der Gleitführung (28₂) des zweiten Transportbandes (36) angeordnet ist, die den gleichen Querschnitt wie diese beiden Gleitführungen aufweist, die um eine Querachse (46) angelenkt ist und die mit einem Druckzylinder (47) versehen ist und deren vorderes Ende einen axialen Längsausschnitt aufweist, dessen Breite größer ist als diejenige des zweiten Transportbandes (36).
